# EUROPÄISCHE PATENTSCHRIFT

(11) **EP 1 082 373 B1**
(45) Veröffentlichungstag und Bekanntmachung des Hinweises auf die Patenterteilung: **03.09.2003**
(21) Anmeldenummer: 99908751.3
(22) Anmeldetag: 29.01.1999
(51) Int. Cl.: C08G 18/70, C08G 18/80, C09J 175/02

(54) **STOFFSYSTEM**
SUBSTANCE SYSTEM
SYSTEME DE MATERIAUX

(30) Priorität: 07.05.1998 DE 19820270
(43) Veröffentlichungstag der Anmeldung: 14.03.2001
(73) Patentinhaber: Jowat AG, 32758 Detmold (DE)
(72) Erfinder: TERFLOTH, Christian, D-32760 Detmold (DE); GUSE, Dieter, D-32584 Löhne (DE); HIPPOLD, Theodor, D-32108 Bad Salzuflen (DE)
(74) Vertreter: Gesthuysen, von Rohr & Eggert
(86) Internationale Anmeldenummer: DE9900223
(87) Internationale Veröffentlichungsnummer: WO99058590

(56) Entgegenhaltungen:
- EP-A- 0 142 242
- EP-A- 0 505 889
- DE-A- 3 529 251
- US-A- 5 159 011

## Beschreibung

Die Erfindung bezieht sich auf eine 1-Komponenten-Dispersion nach Anspruch 1.

Hochwertige Klebeverbindungen werden heute nach dem Stand der Technik mit reaktiven Klebstoffen durchgeführt. Hierzu sind eine Reihe von verschiedenen Klebstoffsystemen bekannt. Polyisocyanate werden hierbei wegen ihrer hohen Reaktionsfähigkeit bei vielen Anwendungen verwendet.

Es gibt z.B. Isocyanat-terminierte Polymere, die nach der Applikation mit Feuchtigkeit vernetzen. Der Nachteil bei diesen Systemen liegt darin, daß die Aushärtung lange dauert, da die Vernetzung von der Diffusionsgeschwindigkeit des Wassers abhängig ist. Bei sehr dicken Schichten kann zudem die Vernetzung auch unvollständig bleiben.

2-Komponenten-Klebstoffe werden unmittelbar vor der Applikation gemischt, wobei sich hier für den Anwender ein zusätzlicher Arbeitsschritt ergibt. Bei der Mischung der 2-Komponenten können zudem Dosierungs- oder Mischfehler auftreten.

Es sind ferner stabile 1-Komponentensysteme bekannt, die sich durch Blockierung der Isocyanate mit monofunktionellen Reaktionspartnern formulieren lassen. Diese Blockierung ist thermisch reversibel, so daß unter Hitzeeinwirkung das Blockierungsmittel abgespalten und das freigesetzte Isocyanat unter Vernetzung mit den reaktiven Gruppen des Polymers eine thermostabile Verbindung eingeht.

Nachteilig bei diesen Systemen ist, daß das Blockierungsmittel, wenn es bei den Anwendungstemperaturen flüchtig ist, verdampft und so die Umwelt belasten kann, oder wenn es im Klebstoff verbleibt, zu Qualitätsnachteilen bei der Klebeverbindung führen kann.

In der EP 0 204 970 bzw. in der zu derselben Patentfamilie gehösenden US-A-4 888 124 wird ein Verfahren zur Herstellung stabiler Dispersionen feinteiliger Polyisocyanate in einer Flüssigkeit durch Behandlung von Polyisocyanaten mit Stabilisatoren offenbart. Um Polyisocyanate und insbesondere feste Polyisocyanate lagerstabil zu dispergieren und eine vorzeitig unerwünschte Reaktion mit dem Medium zu verhindern, werden die dispersen Isocyanate an ihrer Oberfläche desaktiviert. Sie besitzen dann eine sogenannte retardierte Reaktivität.

In der EP 0 204 970 bzw. in der US-A-4 888 124 wird ferner die Verwendung der nach dem Verfahren dieser Druckschrift hergestellten, stabilen Dispersion feinteiliger Polyisocyanate als Vernetzer offenbart. Die Stabilisierung der Polyisocyanate erfolgt durch das Aufbringen einer Polymerumhüllung. Die zur Bildung dieser Polymerumhüllung befähigten Verbindungen werden als Stabilisator bezeichnet. Die desaktivierten Polyisocyanate, welche die Polymerumhüllung aufweisen, werden auch als stabilisierte Polyisocyanate bezeichnet. Nachteilig dabei. ist, daß das Aufbrechen der Polyharnstoffkapsel und damit einhergehend die Vernetzung bei Temperatur zwischen 70 und 180°C stattfindet.

Die EP 0 505 889 A2 beschreibt wäßrige Dispersionen verkapselter Polyisocyanate, die durch Reaktion von Polyisocyanaten mit Polyaminen mit primären oder sekundären Aminogruppen und mit Molekulargewichten von 400 g/mol oder weniger hergestellt sind, wobei der Desaktivierungsgrad, berechnet als Äquivalentverhältnis von Aminogruppen des Desaktivierungsmittels zu Isocyanatgruppen der Polyisocyanate mindestens 0,05 : 1,0 beträgt und vorzugsweise im Bereich von 0,1 : 1,0 bis 0,3 : 1,0 liegt.

Es ist somit Aufgabe der Erfindung, eine 1-Komponenten-Dispersion anzugeben, die bei niedrigeren Temperaturen vernetzt.

Diese Aufgabe wird gelöst durch eine 1-Komponenten-Dispersion nach Anspruch 1. Weitere, vorteilhafte Ausgestaltungen sind Gegenstand der Unteransprüche. Es wurde somit in überraschender Weise gefunden, daß der Einsatz von an sich bekannten, verkapselten oder desaktivierten Isocyanaten als Vernetzerkomponenten in wäßrigen Dispersionen zu lagerstabilen Systemen führt, die jedoch schon bei Raumtemperatur vernetzen, sofern die in Anspruch 1 angegebenen Voraussetzungen erfällt sind.

Es wird davon ausgegangen, daß die bei der Verfilmung von Polymerteilchen auftretenden Autohäsionskräfte die Polymerhüllen der Isocyanate mechanisch zerstört, wodurch es zu einer Vernetzungsreaktion kommt, die durch die Zunahme der Filmkohäsion bzw. Abnahme der Filmdehnung nachweisbar wird.

Die 1-Komponenten-Dispersion nach der Erfindung weist somit den Vorteil auf, daß sie bei relativ niedrigen Temperaturen, nämlich bei Raumtemperatur, vernetzt, wodurch sich die Nachteile von bekannten stabilen 1-Komponentensystemen vermeiden lassen. Gegenüber den bekannten 2-Komponenten-Klebstoffen bietet die hier offenbarte 1-Komponenten-Dispersion nach der Erfindung den Vorteil, daß dem Anwender verfahrensbedingte Fehler, z.B. Dosierungs- oder Mischfehler, nicht mehr unterlaufen können.

Die Mengen der desaktivierten Isocyanate in den 1-Komponenten-Dispersionen nach der Erfindung betragen nach einer Ausgestaltung der Erfindung 0,1 bis 10 Gew.%.

Die 1-Komponenten-Dispersion nach der Erfindung kann in vielfältiger Weise eingesetzt werden, z.B. als Lack, Beschichtung, Dichtstoff, Vergußmasse und/oder als Klebstoff.

Bei Verwendung als Klebstoff kann ein geeigneter Dispersionsklebstoff nach der Erfindung z.B. Dispercoll KA 8758 enthalten. Nach der Erfindung geeignete Isocyanate sind TDI-Urethdion oder TDI-Harnstoff. Diese Isocyanate werden in an sich bekannter Weise desaktiviert und die so erhaltenen desaktivierten Isocyanate werden dann einem geeigneten Polymer, z.B. einem Dispersionsklebstoff, unter Rühren zugegeben. Wenn das desaktivierte Isocyanat homogen und glatt eingearbeitet ist, ist die 1-Komponenten-Dispersion nach der Erfindung einsatzbereit.

Die 1-Komponenten-Dispersion nach der Erfindung kann beispielsweise in vorteilhafter Weise bei der Verklebung von dreidimensional geformten Möbelfronten eingesetzt werden. Derartige Möbelfronten werden heute so hergestellt, daß ein konturierter MDF-Träger mit einer Kunststoffolie unter Druck und Temperatur so verpreßt wird, daß die Folie sich an die durch den Träger vorgegebenen Konturen der MDF-Oberfläche anpaßt. Die kraftschlüssige Verbindung zwischen den beiden Substraten erfordert einen Klebstoff, der zuvor auf dem. Träger aufgebracht wurde. Es ist bekannt, daß zur Erzielung hochwertiger Klebungen mit guter Wärmestandfestigkeit 2-Komponenten-Polyurethandispersionssysteme eingesetzt werden, wobei die wäßrige Dispersion unmittelbar vor Gebrauch mit dem Wasser emulgierbaren Polyisocyanat intensiv gemischt wird.. Durch Dosierungsfehler oder durch unzureichende Vermischung der Komponenten können jedoch die optimalen Wärmestandfestigkeiten nicht erzielt werden. Ferner ist der Verarbeitungszeitraum dieser 2-Komponenten-Systeme durch die Topfzeit auf wenige Stunden begrenzt.

Die oben beschriebenen Nachteile lassen sich somit in vorteilhafter Weise durch den 1-Komponenten-Dispersionsklebstoff vermeiden.

Im folgenden werden Ausführungsbeispiele beschrieben.

### Beispiel 1: Herstellung der desaktivierten Isocyanate

### Beispiel 1.1:

In einem Becherglas werden 100 ml Cyclohexan vorgelegt und unter kräftigem Rühren werden 20 g eines TDI-Urethdions (Desmodur TT, Bayer AG) suspendiert. Anschließend erfolgt die Zugabe einer Lösung von 0,06 g Methylpentamethylendiamin (Dytek A, DuPont) in 50 ml Cyclohexan. Die Lösung wird nach einer Rührzeit von zwei Stunden vom Lösungsmittel befreit, so daß ein feinteiliges, weißes Pulver erzielt wird. Der Desaktivierungsgrad, berechnet als Äquivalentverhältnis von Aminogruppen des Desaktivierungsmittels zu Isocyanatgruppen der Isocyanate, beträgt 0,009:1.

### Beispiel 1.2:

Das Verfahren zur Herstellung entspricht dem nach Beispiel 1.1, wobei anstelle des TDI-Urethdions ein TDI-Harnstoff (Desmodur LS 2116, Bayer AG) eingesetzt wird. Der Desaktivierungsgrad, berechnet als Äquivalentverhältnis von Aminogruppen des Desaktivierungsmittels zu Isocyanatgruppen der Isocyanate, beträgt 0,008:1.

### Beispiel 2: Herstellung und Vernetzung von 1-Komponenten-Dispersionsklebstoffen

Zu Dispercoll KA 8758 werden die desaktivierten Isocyanate nach Beispiel 1.1 und Beispiel 1.2 unter Rühren zugegeben. Es wird solange gemischt, bis die Isocyanate homogen und glatt eingearbeitet sind.

Die Vernetzung bei Raumtemperatur der lagerstabilen 1-Komponenten-Dispersionsklebstoffe wurde an folgenden Beispielen verdeutlicht:

### Vergleichsbeispiel:

Thermoplastische 1-Komponenten-Dispersion: 100 g Dispercoll KA 8758

### Beispiel 2.1:

Vernetzbare 1-Komponenten-Dispersion: 100 g Dispercoll KA 8758 und 4 g desaktiviertes Isocyanat gemäß Herstellungsbeispiel 1.1

### Beispiel 2.2:

Vernetzbare 1-Komponenten-Dispersion: 100 g Dispercoll KA 8758 und 4 g desaktiviertes Isocyanat nach Herstellungsbeispiel 1.2

Es wurden 1000 µm starke Filme mit einem Kastenrakel gezogen, getrocknet (20°C/65 % relative Feuchtigkeit) und gelagert. Die Reißfestigkeit dieser Filme wurde mit einer Zugprüfmaschine bestimmt. Die Ergebnisse sind in der folgenden Tabelle 1 aufgeführt.

**Tabelle 1:**

| Reißfestigkeit von 1-Komponenten-Dispersionsklebstoffen, die bei Raumtemperatur vernetzt wurden. | | | |
|---|---|---|---|
| Tage * | Reißfestigkeit (N/mm²) | | |
| | Vergl.bsp. | Bsp. 2.1 | Bsp. 2.2 |
| 4 | 7,2 | 10,5 | 13,4 |
| 7 | 7,3 | 13,1 | 14,6 |
| 14 | 7,1 | 13,8 | 13,3 |
| 28 | 6,5 | 11,2 | 15,2 |

| | | | |
|---|---|---|---|
| * Lagerung der Filme bei Raumtemperatur | | | |

Aus Tabelle 1 ist zu erkennen, daß die Reißfestigkeit des Vergleichsbeispiels nach 4-, 7-, 14- bzw. 28-tägiger Lagerung der Filme bei Raumtemperatur zwischen 6,5 und 7,3 N/mm² liegt. Die Reißfestigkeiten der Filme nach Beispiel 2.1 und Beispiel 2.2 liegen signifikant über der Reißfestigkeit des Films nach dem Vergleichsbeispiel. Der Film nach Beispiel 2.1 zeigte Reißfestigkeiten bei den angegebenen Lagerungszeiträumen zwischen 10,5 und 13,8, während der Film nach Beispiel 2.2 Reißfestigkeiten zwischen 13,3 und 15,2 aufwies.

Die Viskosität der hergestellten 1-Komponenten-Dispetsionsklebstoffe nach Beispiel 2.1 und Beispiel 2.2 blieb über einen Lagerungszeitraum von 3 Monaten bei Raumtemperatur konstant.

## Patentansprüche

1. Lagerstabile, vernetzbare wäßrige l-Komponenten-Dispersion, enthaltend
a) oberflächendesaktivierte oder verkapselte Isocyanate mit retardierter Reaktivität, ausgewählt aus TDI-Urethdion und TDI-Harnstoff, in einer Menge von 0,1 bis 10 Gew.-%, wobei der Desaktivierungsgrad, berechnet als Äquivalentverhältnis von Aminogruppen des Desaktivierungsmittels zu Isocyanatgruppen der Isocyanate, im Falle von TDI-Harnstoff 0,008 : 1 und im Falle von TDI-Urethdion 0,009 : 1 beträgt; und
b) einen geeigneten Dispersionsklebstoff als Polymerkomponente,
wobei die ausgehend von dieser Dispersion gebildeten Filme bereits bei Raumtemperatur ( 20 °C, 65 % relative Feuchtigkeit) vernetzbar sind.

2. 1-Komponenten-Dispersion nach einem Anspruch 1, wobei der Dispersionsklebstoff ein Dispersionsklebstoff auf Polyurethanbasis (z.B. Disperkoll® KA 8758) ist.

3. 1-Komponenten-Dispersion nach Anspruch 1 oder 2, wobei die Viskosität der 1-Komponenten-Dispersion bei Raumtemperatur über einen Lagerungszeitraum von 3 Monaten konstant bleibt.

4. Klebstoff, umfassend eine 1-Komponenten-Dispersion nach einem der Ansprüche 1 bis 3.

5. Verwendung der l-Komponenten-Dispersion nach einem der Ansprüche 1 bis 3 als Klebstoff.

6. Verwendung der 1-Komponenten-Dispersion nach einem der Ansprüche 1 bis 3 zur Herstellung von bereits bei Raumtemperatur (20 °C, 65 % relative Feuchtigkeit) vernetzbaren Filmen.

7. Filme, erhalten unter Verwendung der 1-Komponenten-Dispersion nach einem der Ansprüche 1 bis 3.

## Claims

1. Storage-stable, cross-linkable aqueous one-component-dispersion, said dispersion comprising:
a) surface-deactivated or encapsulated isocyanates having a retarded reactivity in an amount of from 0.1 to 10 wt. %, said isocyanates being selected from the group consisting of TDI urethdione and TDI urea, wherein the deactivation degree expressed as the equivalent ratio of amino groups of the deactivating agent to isocyanate groups of the isocyanates is 0.008 : 1 in the case of TDI urea and 0.009 : 1 in the case of TDI urethdione; and
b) an appropriate dispersion adhesive as polymer component,
wherein films (layers) formed on the basis of said dispersion are cross-linkable already at room temperature (20 °C, 65 % relative humidity).

2. One-component-dispersion according to claim 1, wherein said dispersion adhesive is a polyurethane-based dispersion adhesive (e.g. Disperkoll® KA 8758).

3. One-component-dispersion according to claim 1 or 2, wherein the viscosity of said one-component-dispersion at room temperature remains constant for a storage period of three months.

4. Adhesive comprising a one-component-dispersion according to any of claims 1 to 3.

5. Use of the one-component-dispersion of any of claims 1 to 3 as an adhesive.

6. Use of the one-component-dispersion according to any of claims 1 to 3 for producing films being cross-linkable already at room temperature (20 °C, 65 % relative humidity).

7. Films obtained by using the one-component dispersion according to any of claims 1 to 3.

## Revendications

1. Dispersion aqueuse à une composante, ladite dispersion étant stable au stockage et réticulable et comprenant
a) des isocyanates encapsulés ou désactivés en leurs surfaces à raison de 0,1 à 10 % en masse, lesdits isocyanates ayant une reactivité retardée et étant choisis parmi l'uréthdione du diisocyanate de toluène (DIT) et l'urée de DIT où le degré de désactivation exprimé en rapport équivalent entre les groupements amino de l'agent de désactivation (désactivateur) et les groupements isocyanate des isocyanates est 0,008 : 1 dans le cas de l'urée de DIT et 0,009 : 1 dans le cas de l'uréthdione de DIT; et
b) un adhésif de dispersion approprié comme composante polymère,
où les films formés à partir de ladite dispersion sont réticulables déjà à la température ambiante (20 °C, humidité relative de 65 %).

2. Dispersion à une composante selon la revendication 1, dans laquelle ledit adhésif de dispersion est un adhésif de dispersion à base d'un polyuréthane (par exemple Disperkoll® KA 8758).

3. Dispersion à une composante selon la revendication 1 ou 2, dans laquelle la viscosité de ladite dispersion à la température ambiante reste constante lors d'un stockage de trois mois.

4. Adhésif comprenant une dispersion à une composante selon l'une des revendications 1 à 3.

5. Utilisation de la dispersion à une composante selon l'une des revendications 1 à 3 comme adhésif.

6. Utilisation de la dispersion à une composante selon l'une des revendications 1 à 3 pour la production de films réticulables déjà à la température ambiante (20 °C, humidité relative de 65 %).

7. Films obtenus par l'utilisation de la dispersion à une composante selon l'une des revendications 1 à 3.
